# EUROPÄISCHE PATENTSCHRIFT

(11) **EP 0 334 919 B1**
(45) Veröffentlichungstag und Bekanntmachung des Hinweises auf die Patenterteilung: **15.09.1993**
(21) Anmeldenummer: 88908133.7
(22) Anmeldetag: 06.10.1988
(51) Int. Cl.: B02C 4/06

(54) **WALZENSTUHL ZUR HERSTELLUNG VON GETREIDEMAHLPRODUKTEN**
ROLL MILL FOR MANUFACTURING MILLED CORN PRODUCTS
MOULIN A CYLINDRES DE FABRICATION DE PRODUITS DE BLE MOULU

(30) Priorität: 06.10.1987 CH 3893/87
(43) Veröffentlichungstag der Anmeldung: 04.10.1989
(73) Patentinhaber: BÜHLER AG, 9240 Uzwil (CH)
(72) Erfinder: BALTENSPERGER, Werner, CH-9242 Oberuzwil (CH); LINZBERGER, Robert, CH-9030 Abtwil (CH)
(74) Vertreter: von Samson-Himmelstjerna, Friedrich R., Dipl.-Phys.
(86) Internationale Anmeldenummer: CH8800182
(87) Internationale Veröffentlichungsnummer: WO8903245

(56) Entgegenhaltungen:
- WO-A-86/01128
- DE-A- 2 642 628
- DE-A- 2 730 166
- US-A- 1 396 712
- US-A- 2 986 348
- US-A- 4 220 287

## Beschreibung

### Technisches Gebiet

Die Erfindung betrifft einen Walzenstuhl für die Vermahlung von Getreide zur Herstellung von Getreidemahlprodukten, wie Mehl, Griess, Dunst usw., durch wiederholtes Walzenvermahlen und Aussichten spezifischer Produktfraktionen, entsprechend dem System der Hochmüllerei nach dem Oberbegriff des Anspruches 1 (siehe DE-A-2730166).

Bei der Herstellung von Brotmehl kennt man zwei grundsätzlich unterschiedliche Mahlverfahren. Vollkorn- bzw. Integral/dunkles Mehl wird durch ein-, zwei- oder dreifaches Vermahlen der ganzen Körner seit alters her entsprechend über ein, zwei oder drei Mahlpassagen und gegebenenfalls von einem Teil der Schalen, bzw. der äußersten Kornschichten, gewonnen.

Dieses System hat anerkannterweise Vorteile. Es bleiben nahezu alle Inhaltsstoffe des Kornes integral erhalten und bieten über Brot und andere Getreideprodukte eine hochwertige Nahrung für den Menschen. Ebenso unbestritten weist aber diese vielfach als Flachmüllerei bezeichnete alte Methode auch Nachteile auf. Die mittels der Integralvermahlung gewonnenen Produkte haben nur eine beschränkte Haltbarkeit. Die entsprechenden Reformprodukte sind meistens für den sofortigen Verzehr bestimmt. Es haften normalerweise Schmutz, Bakterien, Pilzporen usw. vorwiegend an der Kornaußenseite, an der Schale, an. Gerade diese Verunreinigungen sind es, die die Produkte qualitativ verschlechtern und ebenso die Lagerfähigkeit reduzieren, bzw. die Verderbnisgefahr für die Mahlprodukte erhöhen und die Qualität der Endprodukte beeinträchtigen.

Wenig beachtet wird oft die Tatsache, daß das Getreidekorn aus vielen stark unterschiedlichen Partien aufgebaut ist. Diese verschiedenen Partien geben den Endprodukten einer Mühle, d.h. dem Mehl, Griess und/oder Dunst die geforderten Eigenschaften, z. B. spezifische Backeigenschaften. Voraussetzung für die Steuerung dieser Qualitätskriterien ist die Möglichkeit der isolierten Gewinnung der verschiedenen Partien des Mahlkornes. Solche für einen bestimmten Bedarf benötigten Produkte können bei der einfachen Flachmüllerei mit nur einigen wenigen Mahlpassagen nicht wirtschaftlich abgetrennt werden. Erst die sogenannte Hochmüllerei erlaubt die Herstellung der heute für die modernen Eßgewohnheiten benötigten Vielfalt an Ausgangsprodukten.

Das moderne Verfahren ist die sogenannte Hochmüllerei, welche gekennzeichnet ist durch ein vielfach wiederholtes Vermahlen und Sichten nach jeder Vermahlung. Bis vor zwei, drei Jahrzehnten wurde dieser Vorgang oft 15- bis 20mal wiederholt. Mit der jüngeren Entwicklung konnte bewiesen werden, daß bereits eine durchschnittliche zwölf- bis fünfzehnmalige Vermahlung bei guter Betriebsführung zu denselben Resultaten führt. Seit Beginn der 70er Jahre hat sich das kurze Hochmahlverfahren gegenüber dem zuvor angewendeten Hochmahlverfahren fast weltweit als Stand der Technik durchgesetzt.

Ein guter Müller ist in der Lage, selbst aus stark variierenden Rohmaterialien durch Mischen der verschiedenen Getreidequalitäten und gezielte Mühlenführung den vom weiterverarbeitenden Gewerbe, z.B. Bäcker, Teigwarenfabrik usw., geforderten Qualitätsstandart zu erreichen.

Um im Wettbewerb zu bestehen, muß die Mühle bekanntlich von einer bestimmten Menge Rohmaterial eine bestimmte Menge Endprodukte mit hoher Qualität und damit auch mit höherem Preis herausarbeiten. Das heißt, eine Getreidemühle ist stets bestrebt, eine hohe Ausbeute an hellem Mehl, Grieß, usw. zu erzielen. Nur bei hoher Ausbeute und gleichzeitiger Einhaltung der Qualitätskriterien arbeitet eine Mühle gut. Ein nicht unwesentlicher Aspekt für die Gesamtwirtschaftlichkeit ist der Umfang der erforderlichen Betriebsmittel, der in einer Mühle z.B. direkt von der Anzahl der Mahl- und Siebaggregate und dem erforderlichen Raum abhängt. Alle Bestrebungen der jüngsten Zeit haben gezeigt, daß die Vermahlung bei der traditionellen Müllerei nicht weiter verkürzt werden kann, ohne daß sich nicht gleichzeitig auch die Ausbeute oder die Mahlproduktqualität unmittelbar vermindern. Insoweit ist seit etlichen Jahren eine Stagnation in der Entwicklung des müllerischen Mahlverfahrens feststellbar.

### Darstellung der Erfindung

Die Erfindung hat sich nun die Aufgabe gestellt, einen Walzenstuhl für die Vermahlung von Getreide zur Herstellung von Mehl, Grieß, Dunst usw. zu entwickeln, bei dessen Einsatz die Wirtschaftlichkeit einer Mühle verbessert werden kann, vorzugsweise bei völliger Beibehaltung der Flexibilität bzw. Anpassbarkeit der Mühle an die jeweilige spezifische Mahlaufgabe, der Mahlqualität und/oder der Kontrollierbarkeit des Mahlprozesses.

Die erfindungsgemäße Lösung ist dadurch gekennzeichnet, daß der Walzenstuhl aus zwei Doppeleinheiten mit je zwei mit Abstand übereinander angeordneten Walzenpaaren besteht, wobei zwischen den übereinander angeordneten Walzenpaaren innerhalb jeder Doppeleinheit je ein das von dem jeweils oberen Walzenpaar bearbeitete Gut direkt in den Mahlspalt des zugehörigen unteren Walzenpaares überleitender Produktabführtrichter vorgesehen ist und die Doppeleinheiten eine gemeinsame Baueinheit, einen 8-Walzenstuhl bilden. Hiermit wird das Mahlgut mehrfach durch Doppelmahlpassagen ohne Zwischensichtung geführt, also vorzugsweise nach jeder Doppelmahlpaasage gesichtet, wobei jede Vermahlung einzeln steuerbar und kontrollierbar ist.

Versuche mit dem erfindungsgemäß ausgebildeten Walzenstuhl haben zur Überraschung aller beteiligten Fachleute bestätigt, daß die gestellte Aufgabe vollumfänglich gelöst werden konnte. Interessant war dabei die Beobachtung, daß eine Dreifachvermahlung ohne Zwischensichtung, so wie teils in den Anfängen der modernen Müllerei gearbeitet worden ist, deutlich schlechtere Ergebnisse zeigt. Teils mag dies auf eine zu starke Erwärmung des Gutes zurückgeführt werden können, vorwiegend wohl aber darauf, daß bei dreifacher Vermahlung ohne Zwischensichtung ein beachtlich großer Anteil des Mahlgutes unzweckmäßig zerkleinert wird, bzw. in einem viel zu frühen Stadium zu viel Feinanteil produziert wird. Hier liegt wohl eines der wichtigsten Geheimnisse des müllerischen Mahlens, nämlich daß jeder Arbeitsschritt für sich kontrollierbar und überschaubar durchgeführt wird. Der Obermüller weiß mit seiner Erfahrung an jeder Stelle, was er tut. Bei jeder Mahlstufe werden deshalb inder Praxis besondere Bedingungen erzeugt, z. B. durch Einstellung des Mahlspaltes, besondere Riffelung, Differenzial der Mahlwalzen, Durchsatz durch eine Mahlpassage usw..

Ganz besonders überraschend war aber die Tatsache, daß die Doppelpassagenvermahlung nicht nur bei den ersten zwei Schrotpassagen, also bei B 1/B 2 mit Vorteil einsetzbar ist, sondern auch zum Beispiel bei den ersten Ausmahlpassagen C 1/C 2. Darüberhinaus konnte sogar bei zumindest einem Großteil der Rohmaterialien zusätzlich bei B 3/B 4 oder z. B. C 3/C 4 die Doppelpassagenvermahlung erfolgreich eingesetzt werden. Es kann ferner nur von einer, zwei oder drei der vier erwähnten Möglichkeiten Gebrauch gemacht werden und bei allen übrigen Passagen lediglich eine Einfachvermahlung mit anschließendem Sichten. Bei sehr gleichmäßiger Qualität des Rohgetreides können alle Mahlpassagen als Doppelmahlpassage ausgebildet werden.

Das erfindungsgemäße Verfahren eröffnet für den Vermahlungsprozeß also eine vielfältige Entwicklung, welche z. B. darin liegt, daß die Mühle eine Kombination von Doppel und Einfachmahlpassagen aufweist, wobei das Mahlgut nach jeder Doppelmahlpassage und jeder Einfachmahlpassage zwischengesichtet wird.

Hieraus ergeben sich eine ganze Reihe vorteilhafter Variationsmöglichkeiten. Bekanntlich weisen die meisten Müllereimaschinen eine hohe Lebensdauer auf. Viele bestehende Mühlen können bei Anwendung der neuen Lösung die Mühlenleistung ohne Raumprobleme steigern, nämlich durch Einbau von ein, zwei, drei, vier oder mehr Doppelmahlpassagen. Da auch bei den Sichtern eine entsprechende Anzahl Sichtpassagen wegfallen, kann innerhalb eines bestehenden Mühlengebäudes mehr Leistung untergebracht werden. Eine weitere Möglichkeit liegt darin, ein neues Mühlengebäude durch gezielte Wahl entsprechender Einfach- und Doppelmahlpassagen optimaler zu nutzen, wobei die Anzahl der installierten Maschinen gegenüber dem Stand der Technik verringert wird, was sich schlußendlich im Anschaffungspreis ausdrückt. Trotzdem können die gleichen Qualitätswerte garantiert werden; dies durch unveränderte Eingriffsmöglichkeiten in die Vermahlungsführung.

Ganz bevorzugt wird das Gut zumindest zweimalig durch Doppelmahlpassagen geführt, z. B. durch die Kombination B1/B2 und C1/C2 und/oder B1/B2 und B3/B4 und/oder C1/C2 und C3/C4, wobei das Gut nach jeder Doppelmahlpassage gesichtet wird.

Die Erfindung betrifft auch einen Walzenstuhl für die Vermahlung von Getreide zur Herstellung von Mehl, Grieß, Dunst usw., insbesondere zur Verwendung beim erfindungsgemäßen Verfahren und ist dadurch gekennzeichnet, daß er eine Doppel-Einheit mit je zwei mit Abstand übereinander angeordneten Walzenpaaren aufweist. Dieser wird im folgenden auch Acht-Walzenstuhl genannt.

In der Form des Acht-Walzenstuhles entsteht für den Müller nun auch eine neue Kontrollmöglichkeit, indem zwei Mahlstufen gleichzeitig und am gleichen Ort direkt überwacht werden können. Dies bedeutet, daß sowohl eine Veränderung z. B. des ersten Mahlwalzenpaares auf das Mahlergebnis des eventuell unveränderten zweiten Mahlwalzenpaares sofort beurteilt werden kann. Dies war bisher soweit der Anmelderin bekannt ist im Bereich der Hochmüllerei niemals möglich. Dadurch, daß zwischen jeder Vermahlung gesichtet wird, mußte im Stand der Technik nicht nur die entsprechende Zeit, bis das Gut die Sichtung und die zweite Mahlstufe passiert hatte, abgwartet werden, sondern es wurde durch jede zwischengeschaltete Sichtung auch die Zusammensetzung des Mahlgutes verändert, indem einzelne Fraktionen auf andere Passagen geleitet wurden. Es hat sich gezeigt, daß der geringe Nachteil, daß in der zweiten Vermahlung ein geringer Anteil unnötig zerkleinert wird, mehr als kompensiert wird durch den Vorteil der unmittelbaren Kontrollmöglichkeit und auch des unmittelbaren Eingriffes auf beide Mahlwalzenpaare.

Ganz besonders bevorzugt wird unter jedem Walzenpaar ein Produktabführtrichter angeordnet, welche je eine Kontrolltüre aufweisen, zur Überwachung des Mahlgutes nach jeder Vermahlung.

Damit ist die Mühlenführung für den Müller in bezug auf die Vermahlung nahezu unverändert, dies obwohl die neue Lösung ganz unerwartete Vorteile bringt. Der neue Gedanke verlangt nicht blind je zweimal nacheinander zu vermahlen, sondern vielmehr kann durch direkte Kontrolle der ersten und zweiten Stufe jeder Doppelmahlstufe unmittelbar das Mahlergebnis beider Zerkleinerungen unter Kontrolle gehalten werden. Dies hat sich besonders deshalb als sehr wichtig erwiesen, da das müllerische Mahlen nicht bloß ein Zerkleinern ist, sondern vielmehr ein mehrstufiges, schonendes Öffnen des Kornes, Lösen der Endospermteile, schonendes Vermahlen der Grießteile, etwa für Grieß, bestimmt zur Teigwarenherstellung, usw.. Die Beurteilungskriterien sind deshalb nicht einfach die Korngrößenverteilung, sondern ebenso der visuelle Eindruck des ersten Schrotes, Griffigkeit der Mahlprodukte, Farbe, Feinmehlanteil usw.. Hierzu sind aber ebenso Faktoren von Bedeutung wie der Zustand der Walzen, Schärfe der Riffelung, Arbeitsweise von Messerabstreifer und Walzenbürsten, usw. Ohne Übertreiben kann deshalb gesagt werden, daß die Summe dieser von nicht voll beruflich im Müllern stehenden Personen oft als Randfaktoren bezeichneten Parameter in der Praxis eine ebenso große Bedeutung haben wie der an sich leicht durch Automatikmittel überwachbare Mahlspalt. Ohne die Erkenntnis dieser Sachverhalte entpuppt sich wie in jüngster Zeit in recht vielen technischen Fachgebieten ein vermeintlicher technischer Fortschritt als tatsächlicher Rückschritt, der am Ende der Rechnung sehr viel mehr an Aufwendungen benötigt als die durch den angestrebten Fortschritt gewünschten Einsparungen ausmachen.

Weiterhin wird bevorzugt jedes Walzenpaar mit individueller Einstelleinrichtung sowie Fremdkörpersicherung ausgerüstet.

Mit der neuen Erfindung eröffnen sich aber noch ganz verschiedene Betriebsweisen, die bis heute im müllerischen Mahlen nicht zweckmäßig waren. So kann eine übergeordnete Regelung der beiden übereinanderliegenden Mahlwalzenpaare oder nur eines Mahlwalzenpaares auf die tatsächliche Motorleistungsaufnahme erfolgen, im Verhältnis zu dem Durchsatz. Dabei ist es möglich, nur eines der beiden Walzenpaare, bevorzugt das obere, über Automatikmittel auf einen bestimmten Walzenabstand zu steuern. Dadurch läßt sich ein seit langem gehegter Wunsch - nämlich eine bestimmte vorgegebene automatische Steuerung aller Mahlspalte und die Regelung der Intensität der Mahlarbeit über die Motorleistungsaufnahme mehrerer Doppelwalzenpaare - verwirklichen.

Ferner hat es sich als ganz besonders vorteilhaft für die Füh. rung, insbesondere die Überwachung von der Maschine wie der Mahlarbeit erwiesen, daß die Walzen eines Walzenpaares in einer Horizontalebene angeordnet sind. Dies erlaubt zum Beispiel auch einen leichten Walzenwechsel und daß jedes Walzenpaar als austauschbare Baueinheit ausgebildet ist.

Wenn die Aspiration des Speiseraumes mit der Produktabführung durch den Produktabführtrichter verbunden ist, kann Staubaustritt vermieden werden, insbesondere tritt für die Kontrolle der Mahlarbeit keine Störung ein, wenn die Kontrolltüre für das obere Mahlwalzenpaar oder für das untere oder beide geöffnet werden.

Das müllerische Mahlen setzt weiterhin voraus, daß in der großen Mehrzahl der Passagen die Mahlwalzen je eines Mahlwalzenpaares unterschiedliche Umlaufgeschwindigkeiten aufweisen, wobei im Regelfall bevorzugt alle Walzen eines Achtwalzenstuhles den gleichen Durchmesser aufweisen.

Die beiden direkt übereinander liegenden Walzenpaare weisen gemeinsame Steuermittel auf, zur Ein- und Ausrückung der beweglichen Walzen. (Bei Vorhandensein bzw. Nichtvorhandensein von Mahlgut.)

Ein weiterer, besonders vorteilhafter Ausgestaltungsgedanke liegt darin, daß die Mahlspaltverstelleinrichtung je einer Fernsteuerung zugeordnet ist und Rechnermittel besitzt, zur Speicherung und Wiederabrufung der für jede Mahlaufgabe spezifischen Mahlspalteinstellungen sowie aller übrigen Einstellwerte der Verarbeitungs- und Transportmittel.

Die Erfindung wird nun anhand einiger Ausführungsbeispiele mit weiteren Einzelheiten erläutert.

### Kurze Beschreibung der Erfindung

- Fig. 1: zeigt einen neuen Acht-Walzenstuhl im Querschnitt
- Fig. 2: Zeigt eine Seitenansicht der Fig. 1 mit Lagerung, Mahlwalzeneinstellung, Antrieb, usw.
- Fig. 3: schematisch die Vermahlung und Sichtung als ein Ausführungsbeispiel

### Wege zur Ausführung der Erfindung

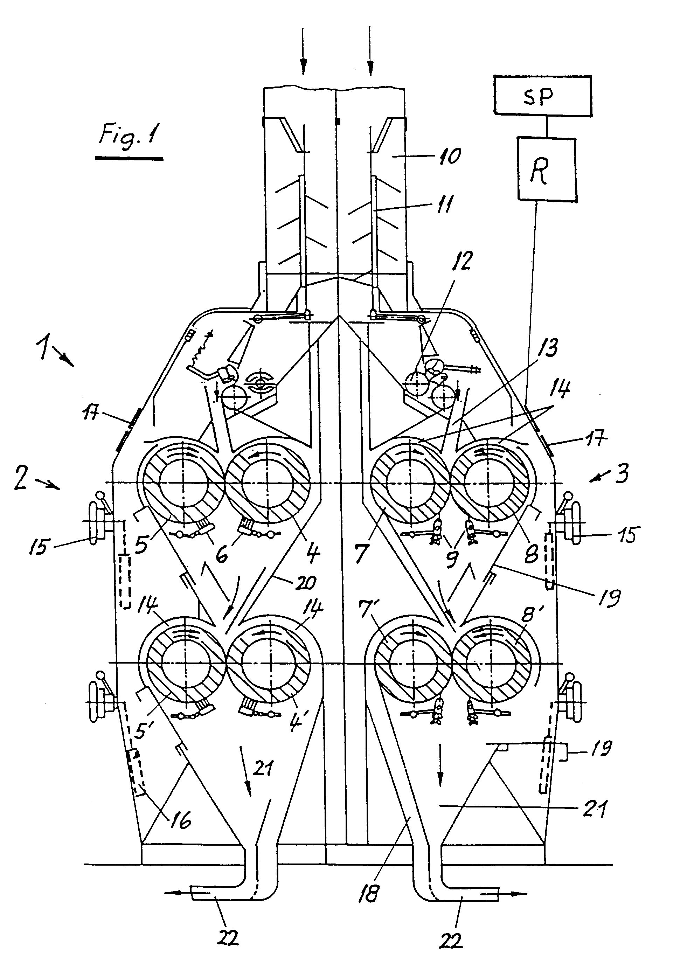

Es wird nun auf die Fig. 1 Bezug genommen. Der Achtwalzenstuhl 1 besteht aus zwei Hälften, die linke Hälfte ist als Schrotpassage 2 und einer rechten Hälfte als Ausmahlpassage 3 dargestellt. Die Schrotpassage 2 hat meistens Riffelwalzen 4 resp. 5, wobei im Bild die schneller laufende Walze 5 mit zwei Pfeilen markiert ist. Unterhalb der Walzen 4 und 5 befindet sich je eine Abstreifbürste 6. Bei den Ausmahlpassagen werden mehrheitlich glatte Walzen 7 resp. 8 und zur Sauberhaltung der Walzenoberfläche Abstreifmesser 9 verwendet. Je nach spezifischer Mahlarbeit wird das jeweils untere Walzenpaar 4', 5', bzw. 7', 8' die gleiche Walzengattung Grobriffel, Feinriffel oder als Glattwalzen ausgebildet sein, wie das entsprechende obere.

Das Gut wird über einen Speisezylinder 10 links oder rechts in den Walzenstuhl 1 geleitet. Dabei ist es nur bei ganz grossen Mühlenleistungen angezeigt, die linke und die rechte Walzenstuhlhälfte identisch auszuführen, derart, dass beide Hälften je die Hälfte der Gutmenge verarbeiten müssen. In dem Speisezylinder 10 ist ein Sensor 11 im Bild als sogenannter "Christbaum" ausgebildet, der eine Produktspeisung 12 steuert, sodass eine jeweils ankommende Gutmenge, die oben beim Speisezylinder 10 zufliesst, in gleicher Grösse durch die Produktspeisung ausgetragen wird. Das Gut wird über einen Speisekanal 13 direkt in den Mahlspalt geleitet. Eine starke Luftströmung wird in dem Speisekanal 13 erzeugt, was vorteilhafterweise durch zwei um die Walzen 4, 5 bzw. 7, 8 herumgeführten Luftkanäle 14 sichergestellt werden kann. Das vom oberen Walzenpaar 4, 5 geschrotete Gut wird über einen Produktabführtrichter 20 direkt in den Mahlspalt des unteren Walzenpaares 4', 5' geleitet. Auch beim unteren Walzenpaar 4', 5, wird die Luft durch Luftkanäle 14 aspiriert. Das Mahlgut wird durch einen Produktabführtrichter 21 ein Uebergabeelement 22 den Zwischenüberhebungen übergeben. Alle vier Walzenpaare 4, 5 - 4', 5' - 7, 8 - 7', 8' können durch eine Einstellvorrichtung 15 bezüglich des Mahlspaltes eingestellt werden. Alle übrigen Einrichtungen wie Fremdkörpersicherung, Einund Ausrückvorrichtung usw., werden wie bei normalen Vierwalzwerken verwendet. Hierzu wird vollinhaltlich auf die DE-A-27 30 166 verwiesen. Es hat sich gezeigt, dass die in der erwähnten Veröffentlichung der Anmelderin gezeigte Baueinheit für das Walzenpaar mit grossem Vorteil auch bei den Achtwalzwerken einsetzbar ist, sodass im Falle einer Kombination von Achtwalzwerken und Vierwalzwerken in jedem Fall auf dem gleichen Grundaufbau des sogenannten Walzenpaketes ausgegangen werden kann, was ein weiterer Vorteil für den Hersteller wie für den Anwender ist.

In einzelnen Fällen kann es angezeigt sein, über dem unteren Walzenpaar eine Speisewalze resp. Produktverteilwalze vorzusehen. Bevorzugt aber erfolgt für beide Walzenpaare die Walzenein- und Ausrückung über den gemeinsamen Sensor 11.

Auf der rechten Bildhälfte ist in dem Produktabführtrichter 21 zusätzlich eine Luftführung 18 dargestellt. Dies kann besonders bei dunst- und mehlartigen Mahlgütern Vorteile bringen, da durch getrennte Luft- und Produktführung eine kompaktere Führung des fallenden Produktstromes möglich ist.

Jedes Mahlwalzenpaar (4, 5 - 7, 8) weist je eine eigene Mahlspaltverstelleinrichtung auf, welche aus einem Handrad 15 sowie den entsprechenden Verstellelementen besteht. Zusätzlich kann eine motorische Verstelleinrichtung 16 vorgesehen sein, wobei beide über eine Anzeige 17 den momentanen Abstandswert der zwei Mahlwalzen überwachen können. Ferner kann die motorische Verstellung über Rechner (R) und Speichermittel automatisch erfolgen.

Jedem Mahlwalzenpaar ist ferner eine Kontrolltüre 19 zugeordnet, welche in der rechten Bildhälfte oben in geschlossener und unten in geöffneter Position dargestellt ist. Unabhängig, ob der Walzenstuhl in Betrieb ist oder nicht, kann die Kontrolltüre geöffnet werden. Dabei bleiben durch oben beschriebene zusätzliche Luftkanäle 14, 18 konstante Luftdruckverhältnisse und damit konstante Mahlverhältnisse aufrechterhalten.

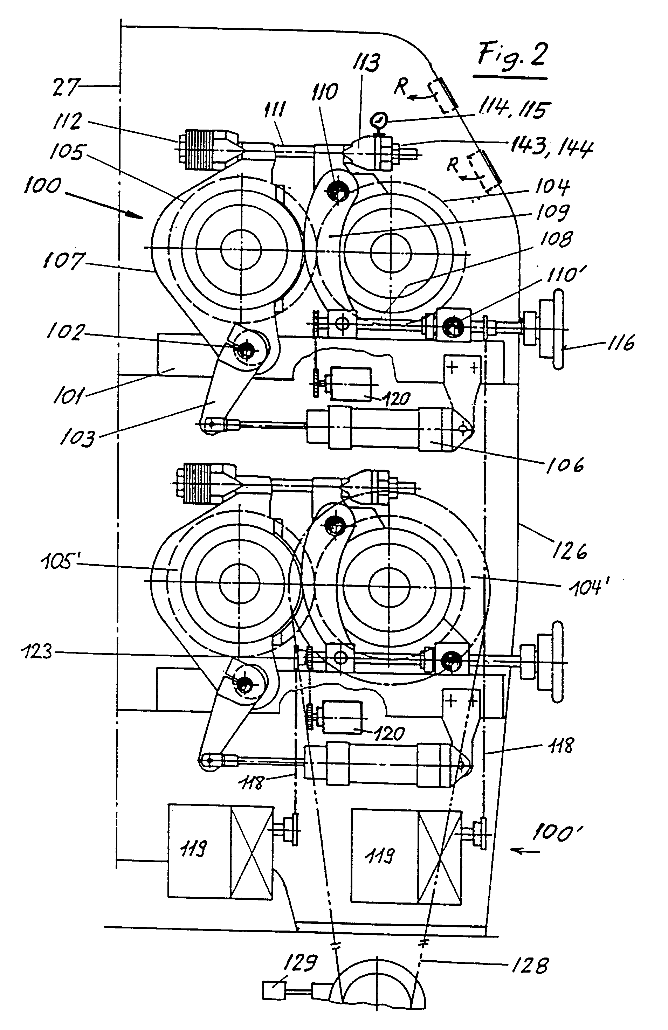

In der Folge wird nun Bezug genommen auf die Fig. 2, in welcher Verstellorgane als eine Baugruppe 100 und ein steuerbarer Verstellantrieb 100' erkennbar ist. Die zwei Mahlwalzen 104 und 105 sind auf einem gemeinsamen Träger 101 abgestützt. Die Loswalze 105 ist an einem ortsfesten Exzenterbolzen 102 verschwenkbar befestigt, wobei die Ein- und Ausrückung durch einen entsprechenden Hebel 103, sowie einem Ausrückzylinder 106 gesteuert wird. Durch die Verschwenkbewegung des Hebels 103 wird der Exzenterbolzen 102 verdreht und verursacht eine horizontale Verschiebung des unteren Teiles eines verschwenkbaren Lagergehäuses 107, sodass damit der Abstand der beiden Mahlwalzen voreingestellt werden kann. Für die genaue Einstellung der Mahlwalzen wäre diese Einrichtung schlechter geeignet. Diese wird denn auch nur benutzt, um die Mahlwalzen in eine eingerückte oder ausgerückte Stellung bzw. in zwei fixierte Stellungen zu bringen. Die eigentliche Feineinstellung der Mahlwalzen 104 und 105 geschieht über eine Verstellspindel 108, welche durch Drehung direkt einen Einstellarm 109 um ein ortsfestes Drehlager 110 bewegt. Das obere, kürzere Ende des Einstellarmes 109 ist über Zugstange 111 kraftschlüssig mit dem verschwenkbaren Lagergehäuse 107 verbunden. Die Kraftübertragung erfolgt über Schneiden, die auf der einen Seite Teil einer Ueberlast-Federsicherung 112 ist. Auf der gegenüberliegenden Seite ist an der Zugstandge 111 ein einstellbarer Gegen-Haltekopf 113, sowie eine Druckmesseinrichtung 114 mit Druckanzeigevorrichtung 115 angeordnet. Um bei Servicearbeiten die Mahlwalzen parallel einstellen zu können, kann eine Korrektur auf der jeweils erforderlichen Seite über Einstellschrauben 143, 144 vorgenommen werden. Die Verstellspindel 108 ist durch Lager 110' ortsfest gehalten und kann nun über ein Handrad 116, welches eine direkt eingebaute Anzeigeuhr aufweist, oder aber über motorische Mittel, Uebertriebskette 118 sowie einem Getriebemotor bzw. Antriebsmotor 119 betätigt werden. Der Antriebsmotor 119 ist am Walzenstuhl 126 befestigt und ist über eine Rutschkupplung und einem Kettenrad in direkter Verbindung mit der Verstellspindel 108.

Direkt mit der Verstellspindel 108 ist ferner ein Positionsmelder 120 verbunden, sodass jede Bewegung des Kettenrades 123 bzw. des Handrades 116 in dem Positionsmelder 120 registriert und an die gewünschten Stellen weitergeleitet wird. In Fig. 2 ist ferner ein Antriebsriemen 128 für den Antrieb der Mahlwalzen 104 und 105 resp. 104' und 105' nur angedeutet. Es ist möglich, auch in das Antriebssystem ein elektrisches Leistungsbedarfs-Mess- und Anzeigegerät 129 vorzusehen. Damit kann zum Beispiel die elektrische Leistungsaufnahme auf untere und obere Werte begrenzt, und bei Ueberschreiten des vorgewählten Bereiches, z.Bsp. ein oder beide Mahlwalzenpaare auseinander gerückt werden. Es kann damit aber auch z.Bsp. die elektrische Leistungsaufnhame als Funktion des unteren Mahlspaltes geregelt werden, wobei in diesem Beispiel der obere Mahlspalt von der Automatik fix eingestellt wird.

Alle Signale eines Walzenstuhles werden bevorzugt über einen Maschinenrechner R koordiniert und gesteuert, wobei der Maschinenrechner R die benötigten Sollwerte von einem zentralen Computer mit Speicher Sp abrufen kann. Der Positionsanzeiger wird bevorzugt mit einem Positionsgrenzwertschalter ausgerüstet, der auf vorwählbare Grenzwerte einstellbar, und auf diese Weise eine automatische Fehleinstellung verhindern kann. Ein Positionsgrenzwertschalter hat den Vorteil, dass auch eine Fehlhandeinstellung damit verhindert werden kann, da Handrad wie auch automatische Verstellung eine entsprechende Wegverschiebung der Kette 118 ergeben. Der Positionsmelder kann genauso wie der Verstellmotor 119 mit einem Eingabe-Angabegerät verbunden sein, das entsprechende Signale von dem Maschinenrechner R erhält bzw. abgibt, entsprechend mit Digitalanzeige und Handeingabetasten. Im gleichen Sinne kann die Druckmess- und Anzeigevorrichtung 114, 115 an dem Maschinenrechner angeschlossen werden. Je nach Ausbaugrad eines Walzwerkes können eine oder mehrere Sicherheiten am selben Walzwerk vorgesehen werden. Wenn zum Beispiel Riffelwalzen eingebaut werden, ist die Mahldrucküberwachung weniger sinnvoll, dagegen ist die Ueberwachung des Abstandes der Mahlwalzen, sei es durch den Positionsanzeiger oder einem Distanzmesser von Vorteil. Umgekehrt liegt es bei Glattwalzen, bei denen eine Drucküberwachung mehr Vorteile bringt. Mit einem Rechner und den angedeuteten Signalleitungen soll angedeutet werden, dass der Computer bzw. Speicher eine ganze Anzahl, gegebenenfalls alle Walzenstühle in einer Mühle steuert, und wenn erforderlich auch Regelfunktionen koordiniert.

Als ganz besonders vorteilhaft hat es sich ferner erwiesen, dass die Digitalanzeige einen Wert entsprechend einer Zeitmessung (Uhr 05.50) angibt und vorzugsweise einen identischen Wert entsprechend einer Stellungsanzeigevorrichtung bzw. der Anzeigeuhr des Handrades wiedergibt.

Der grosse Vorteil liegt darin, dass die Erfahrungswerte von nicht-automatisierten oder nicht-fernsteuerbaren Walzenstühlen verglichen und für den Aufbau oder die Verbesserung entsprechender Steuerprogramme verwertbar sind.

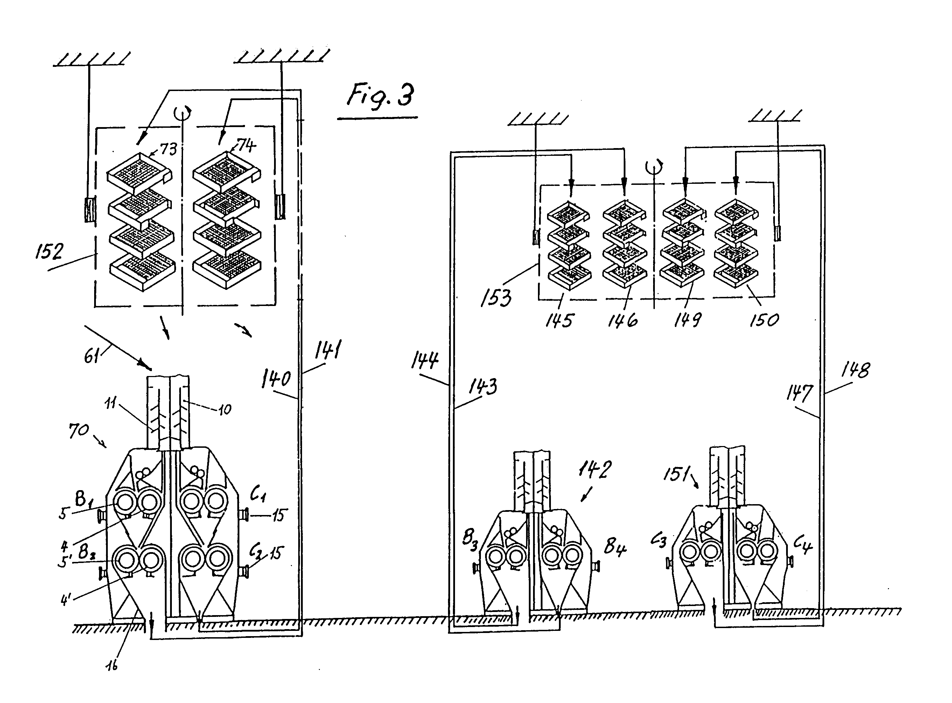

In der Folge wird nun auf die Fig. 3 Bezug genommen. Diese Fig. 3 zeigt die Kombination von Doppelmahlpassagen und Einfachmahlpassagen. Dabei sind die Doppelmahlpassagen B₁/B₂ und C₁/C₂ in einem einzigen Achtwalzwerk 70 zusammengefasst. Eine Förderleitung 140 bringt das Mahlgut der ersten Doppelvermahlung B₁/B₂ auf das erste Grosssiebabteil 73. Der dritte Schrot B₃, ebenso der vierte Schrot B₄ werden auf je eine Einfachmahlpassage in einen 4-Walzenstuhl 142 vermahlen. Ueberhebungen 143 resp. 144 bringen das dritte resp. vierte Schrot in die entsprechenden Siebabteile 145 resp. 146. Die ersten beiden Ausmahlpassagen C₁ und C₂ sind wiederum als Doppelvermahlung ausgeführt. Das von C₂ anfallende Gut wird über eine pneumatische Transportleitung 141 in das zweite Grosssiebabteil 74 geleitet. Die Ausmahlpassagen C₃ und C₄ sind wiederum als Einfachmahlpassagen (Vierwalzwerk 151) gebildet und die entsprechenden Produkte werden mit Ueberhebungen 147 resp. 148 in das entsprechende dritte resp. vierte Siebabteil 149 und 150 gefördert. Die folgenden Ausmahlpassagen, ebenso wie die nicht dargestellten hinteren Schrotpassagen können je nach speziellen Anforderungen der Mühle, sei es als Doppel- oder als Einfachmahlpassagen ausgeführt sein. Die Grossflächensiebe 73, 74 usw. können in einen besonderen Grossplansichter 152 zusammengefasst sein, ebenso entsprechend die Siebabteile 145, 146, 149, 150 in einen Plansichter 153 entsprechend dem Stand der Technik.

## Patentansprüche

1. Walzenstuhl für die Vermahlung von Getreide zur Herstellung von Mehl, Grieß, Dunst usw., entsprechend dem System der Hochmüllerei, der mit zwei in Mahlrichtung parallel nebeneinander angeordneten, über einen Speisezylinder (10) mit je einer Mahlgutzuführung mit Sensor und Produktspeisung (12) in Verbindung stehenden Walzenpaaren (4; 5 und 7; 8) ausgerüstet ist, wobei jedes unabhängig voneinander arbeitende Walzenpaar (4; 5 und 7; 8) mit einer individuellen Einstelleinrichtung (15) für den Mahlspalt und je einer Fremdkörpersicherung (112) ausgestattet und jedem Walzenpaar (4; 5 und 7; 8) ein eine Kontrolltür (19) aufweisender Produktabführtrichter (21) zugeordnet ist, **dadurch gekennzeichnet,** daß der Walzenstuhl aus zwei Hälften bzw. aus zwei Doppeleinheiten (2; 3) mit je zwei mit Abstand übereinander angeordneten Walzenpaaren (4, 5; 4', 5' und 7, 8; 7', 8') besteht, wobei zwischen den übereinander angeordneten Walzenpaaren (4; 5 und 7; 8) und (4'; 5' und 7'; 8') innerhalb jeder Doppeleinheit (2; 3) je ein das von dem jeweils oberen Walzenpaar (4; 5 und 7; 8) bearbeitete Gut direkt in den Mahlspalt des zugehörigen unteren Walzenpaares (4'; 5' und 7'; 8') überleitender Produktabführtrichter (20) vorgesehen ist und die Doppeleinheiten (2; 3) eine gemeinsame Baueinheit, einen 8-Walzenstuhl, bilden.

2. Walzenstuhl nach Patentanspruch 1, **dadurch gekennzeichnet,** daß jedem Mahlwalzenpaar (4, 5; 4', 5' und 7, 8; 7', 8') eigene Einstellmittel (15; 16) und Kontrollmittel (Kontrolltür) (19) zugeordnet sind.

3. Walzenstuhl nach Patentanspruch 1 oder 2, **dadurch gekennzeichnet,** daß alle Walzen (4; 4'; 5; 5'; 7; 7'; 8; 8') des 8-Walzenstuhls einen gleichen Durchmesser aufweisen und die Walzen (4; 5 und 4'; 5' und 7; 8 und 7'; 8') je eines Walzenpaares in einer Horizontalebene angeordnet sind.

4. Walzenstuhl nach einem der Patentansprüche 1 bis 3, **dadurch gekennzeichnet,** daß jeweils zwei direkt übereinanderliegende Walzenpaare (4; 5 und 4'; 5' sowie 7; 8 und 7'; 8') gemeinsame Steuermittel zum Ein- und Ausrücken der jeweils beweglichen Walze (bei Vorhandensein, bzw. bei Nichtvorhandensein von Mahlgut) aufweisen.

5. Walzenstuhl nach einem der Patentansprüche 1 bis 4, **dadurch gekennzeichnet,** daß jedes Walzenpaar (4, 5; 4', 5'; 7, 8; 7', 8') als austauschbare Baueinheit ausgebildet ist.

6. Walzenstuhl nach einem der Patentansprüche 1 bis 5, **dadurch gekennzeichnet,** daß die Aspiration des Speiseraumes mittels eines Luftführkanals (18) mit der Produktabführung durch den Producktabführtrichter (21) verbunden ist.

7. Walzenstuhl nach einem der Patentansprüche 1 bis 6, **dadurch gekennzeichnet,** daß jedes Walzenpaar (4, 5; 4', 5'; 7, 8; 7', 8'), unabhängig von einer über den Produktstrom geregelten Walzenein- und -ausrückung, eine Mahlspaltverstellvorrichtung aufweist.

## Claims

1. Roller stand for the grinding of grain for the production of flour, semolinas, middlings etc., using the high grinding method, equipped with two pairs of rollers (4; 5 and 7; 8) which are situated parallel side by side in the grinding direction and are connected via a feed cylinder (10) each to a system supplying material for grinding, with sensor and product feed (12), wherein each pair of rollers (4;5 and 7; 8), operating independently of one another, is provided with an individual adjusting device (15) for the grinding gap and with a protective device (112) against foreign matter in each case, and a product discharge hopper (21) having a monitoring door (19) is associated with each roller pair (4; 5 and 7; 8), characterised in that the roller stand comprises two halves or two double units (2; 3) each with two roller pairs (4,5; 4',5' and 7,8; 7'; 8') arranged spaced one above the other, and between the roller pairs (4; 5 and 7; 8) and (4',5' and 7';8') arranged one above the other within each double unit (2; 3) there is provided in each case a product discharge hopper (20) transferring the material processed by the respective upper roller pair (4; 5 and 7; 8) directly into the grinding gap of the associated lower roller pair (4';5' and 7';8'), and the double units (2; 3) form a joint assembly, an 8-roller stand of rollers.

2. Roller stand according to claim 1, characterised in that each grinding roller pair (4, 5; 4', 5' and 7, 8; 7', 8') has associated with it its own adjusting means (15; 16) and monitoring means (monitoring door) (19).

3. Roller stand according to claim 1 or 2, characterised in that all the rollers (4; 4'; 5; 5'; 7; 7'; 8; 8') of the 8-roller roller stand have the same diameter, and the rollers (4; 5 and 4'; 5' and 7; 8 and 7'; 8') of each roller pair are arranged in one horizontal plane.

4. Roller stand according to one of claims 1 to 3, characterised in that each two roller pairs situated directly above one another (4; 5 and 4'; 5', likewise 7; 8 and 7';8') have common control means for engaging and disengaging the respective movable roller (when material for grinding is and is not present respectively).

5. Roller stand according to one of claims 1 to 4, characterised in that each roller pair (4,5; 4',5'; 7,8; 7',8') is constructed as an interchangeable sub-assembly.

6. Roller stand according to one of claims 1 to 5, characterised in that the aspiration of the feed chamber is connected to the product discharge through the product discharge hopper (21) by means of an air guide duct (18).

7. Roller stand according to one of claims 1 to 6, characterised in that each roller pair (4, 5; 4',5'; 7, 8; 7', 8') has a grinding gap adjusting device, independently of a roller engaging and disengaging arrangement regulated through the agency of the product flow.

## Revendications

1. Appareil à cylindres pour la mouture de céréales en vue de la production de farine, semoule, finots, etc., conformément au principe de la mouture haute, comprenant deux paires de cylindres (4, 5 ; 7, 8) disposées l'une à côté de l'autre, en parallèle suivant la direction de mouture, et communiquant chacune avec une amenée de matière à moudre, au moyen d'un élément cylindrique d'alimentation (10) comportant un capteur et une alimentation de produit (12), les paires de cylindres (4, 5 ; 7, 8) fonctionnant d'une manière indépendante l'une de l'autre et comportant chacune un dispositif individuel (15) de réglage de l'écartement des cylindres et une sécurité (112) de protection vis-à-vis des corps étrangers, tandis qu'il est associé à chaque paire de cylindres (4, 5 ; 7, 8) une trémie de sortie de produit (21) comportant une porte de contrôle (19), caractérisé en ce qu'il est composé de deux moitiés ou de deux unités doubles (2 ; 3) comportant chacune deux paires de cylindres (4, 5 ; 4', 5' et 7, 8 ; 7', 8') disposées l'une au-dessus de l'autre et à distance l'une de l'autre, tandis qu'il est prévu une trémie de sortie de produit (20) à l'intérieur de chaque unité double (2 ; 3), entre les paires de cylindres (4, 5 ; 7, 8 et 4', 5' ; 7', 8') disposées l'une au-dessus de l'autre, chaque trémie de sortie de produit (20) envoyant la matière traitée par la paire supérieure de cylindres (4, 5 ou 7, 8) correspondante directement dans l'intervalle de mouture de la paire inférieure de cylindres (4' ; 5' ou 7' ; 8') associée, les unités doubles (2 ; 3) constituant ainsi une unité structurelle commune formée d'un appareil à huit cylindres.

2. Appareil à cylindres suivant la revendication 1, caractérisé en ce qu'à chaque paire de cylindres de mouture (4, 5 ; 4', 5' et 7, 8 ; 7', 8'), il est associé des moyens de réglage (15 ; 16) et des moyens de contrôle (porte de contrôle) (19) qui lui sont propres.

3. Appareil à cylindres suivant l'une des revendications 1 et 2, caractérisé en ce que tous les cylindres (4, 4', 5, 5', 7, 7', 8, 8') de l'appareil à huit cylindres ont un diamètre identique et en ce que les cylindres (4, 5 ; 4', 5' ; 7, 8 ; 7', 8') de chaque paire de cylindres sont disposés dans un plan horizontal.

4. Appareil à cylindres suivant l'une des revendications 1 à 3, caractérisé en ce que les deux paires de cylindres (4, 5 et 4', 5', ainsi que 7, 8 et 7', 8') chaque fois situées directement l'une au-dessus de l'autre comportent des moyens communs de commande pour l'embrayage et le débrayage des cylindres mobiles correspondants (respectivement en présence ou en l'absence de matière à moudre).

5. Appareil à cylindres suivant l'une des revendications 1 à 4, caractérisé en ce que chaque paire de cylindres (4, 5 ; 4', 5' ; 7, 8 ; 7', 8') est réalisée sous la forme d'une unité structurelle remplaçable.

6. Appareil à cylindres suivant l'une des revendications 1 à 5, caractérisé en ce que l'aspiration de la chambre d'alimentation est reliée à l'extraction de produit au moyen d'un conduit de passage d'air (18) traversant la trémie de sortie de produit (21).

7. Appareil à cylindres suivant l'une des revendications 1 à 6, caractérisé en ce qu'indépendamment d'un embrayage/débrayage des cylindres réglé par le débit de produit, chaque paire de cylindres (4, 5 ; 4', 5' ; 7, 8 ; 7', 8') comporte un dispositif de réglage de l'écartement des cylindres.
